# EUROPEAN PATENT SPECIFICATION

(11) **EP 3 759 884 B1**
(45) Date of publication and mention of the grant of the patent: **20.07.2022**
(21) Application number: 18711695.9
(22) Date of filing: 01.03.2018
(51) Int. Cl.: H04L 65/612, H04L 65/60, H04L 65/80

(54) **ARTIFICIAL INTELLIGENCE (AI) BASED ENHANCED RESOLUTION CONTENT DELIVERY**
AUF KÜNSTLICHER INTELLIGENZ (KI) BASIERENDE INHALTSBEREITSTELLUNG MIT VERBESSERTER AUFLÖSUNG
DISTRIBUTION DE CONTENU À RÉSOLUTION AMÉLIORÉE BASÉE SUR UNE INTELLIGENCE ARTIFICIELLE (AI)

(43) Date of publication of application: 06.01.2021
(73) Proprietor: Telefonaktiebolaget LM Ericsson (publ), 164 83 Stockholm (SE)
(72) Inventor: ZHU, Zhongwen, Québec H4R 3H7 (CA)
(74) Representative: Ericsson
(86) International application number: PCT/IB2018/051319
(87) International publication number: WO 2019/166860

(56) References cited:
- US-A1- 2016 323 348
- US-A1- 2017 161 876
- US-A1- 2017 339 431
- CHOI JAE-SEOK ET AL: "A Deep Convolutional Neural Network with Selection Units for Super-Resolution", 2017 IEEE CONFERENCE ON COMPUTER VISION AND PATTERN RECOGNITION WORKSHOPS (CVPRW), IEEE, 21 July 2017 (2017-07-21), pages 1150-1156, XP033145895, DOI: 10.1109/CVPRW.2017.153 [retrieved on 2017-08-22]
- KAPPELER ARMIN ET AL: "Video Super-Resolution With Convolutional Neural Networks", IEEE TRANSACTIONS ON COMPUTATIONAL IMAGING, IEEE, vol. 2, no. 2, 1 June 2016 (2016-06-01), pages 109-122, XP011611409, DOI: 10.1109/TCI.2016.2532323 [retrieved on 2016-05-03]

## Description

### TECHNICAL FIELD

The present disclosure relates to content delivery networks and content delivery from delivery nodes to user devices.

### BACKGROUND

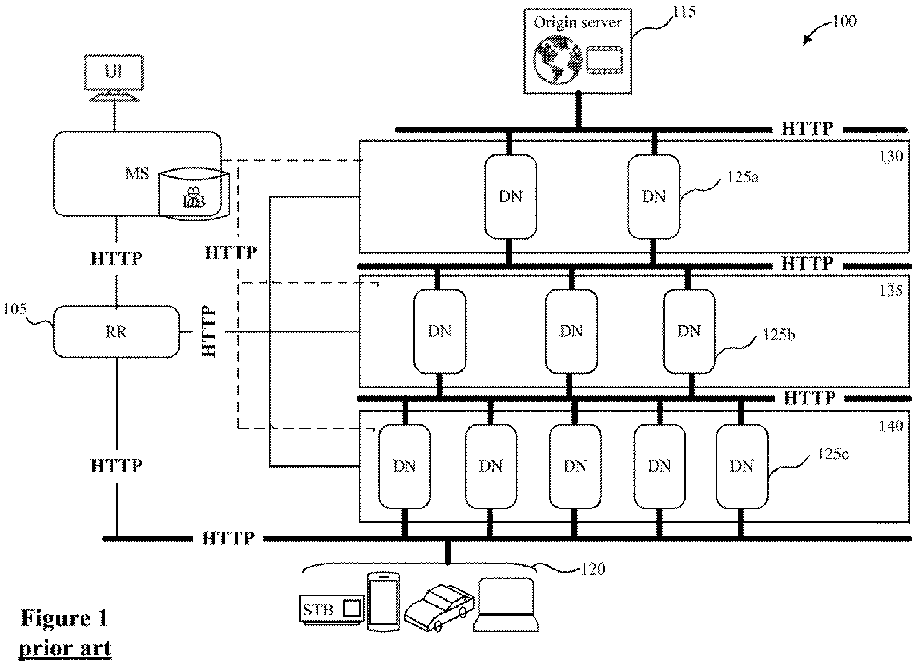

In Figure 1 illustrates a typical content delivery network (CDN) deployment 100. The request router (RR) 105 makes routing decisions for client requests. The RR 105 is a central control component within the CDN 100. Delivery nodes (DNs) 125a-c, generally 125, cache the contents for the origin server 115 and deliver the cached contents to the end user devices 120. In figure 1, the delivery nodes 125a, 125b and 125c are respectively deployed in three tiers: core 130, region 135 and edge 140, to reduce the bandwidth usage towards the origin server 115 when a large number of client requests for the same content are received, such as during a live broadcast event.

CDN 100 is designed to handle video traffic, which normally presents large media files. With the advent of adaptive bit rate (ABR) technology, it became possible to split a large video file into a list of smaller files (chunks). Then, instead of handling large files, the CDN caches and delivers small data chunks (or files, also called segment files) to the clients.

For ABR content delivery, the main manifest file can include either sub-manifest files or segment files (media). Each manifest file represents one asset, which can include different versions, such as low resolution for mobile devices, high resolution for STB devices, etc.

The high-resolution content is associated with a large segment files. Hence high-resolution content consumes large bandwidth capability and cache storage of the delivery nodes, especially for edge nodes. Further, due to the large size of the segment files for high-resolution content, any network connection failure between the client and an edge delivery node cause "a bad end user experience", which is unwanted for both the content provider and the CDN operator.

Patent application US 2017/0161876 A1 discloses a technique for smoothing images using machine learning. A machine learning system is trained using multiple training items. Each training item includes a boundary shape representation and a positional indicator. To generate the training item, a smooth image is downscaled to produce a corresponding blocky image that includes multiple blocks. For a given block, the boundary shape representation encodes a blocky boundary in a neighborhood around the given block. The positional indicator reflects a distance between the given block and a smooth boundary of the smooth image. To smooth a blocky image, a boundary shape representation around a selected block is determined. The representation is encoded as a feature vector and applied to the machine learning system to obtain a positional indicator. The positional indicator is used to compute a location of a smooth boundary of a smooth image.

Patent application US 2017/0339431 A1 discloses a real-time system and method for displaying video on a display. Received compressed video data is decoded to produce an uncompressed first video frame, a first frame syntax element, an uncompressed second video frame, and a second frame syntax element. A computationally intensive process is applied to the uncompressed first video frame to produce an enhanced first video frame. A block having a portion of the enhanced first video frame from the enhanced first video frame is adaptively transferred to the uncompressed second video frame to produce an enhanced second video frame without applying the computationally intensive process to the uncompressed second video frame. The transferring is guided by the first frame syntax element and the second frame syntax element. The enhanced first video frame and the enhanced second video frame are displayed.

How to utilize the edge delivery nodes more efficiently in terms of throughput and footprint without compromising the end user experience is therefore a very challenging task.

### SUMMARY

According to aspects of the present disclosure, a method, an edge delivery node, a set-top-box and a user device according to the independent claims are provided. Developments are set forth in the dependent claims.

The method, edge delivery node, user device and set-top-box provided herein present improvements to the way previous delivery methods, edge delivery nodes, user devices and set-top-box operate.

### BRIEF DESCRIPTION OF THE DRAWINGS

Figure 1 is a schematic illustration of a content delivery network of the prior art.
Figure 2 is a schematic illustration of a system according to an example embodiment.
Figure 3a-e is a traffic flow according to an example embodiment.
Figure 4a-d is a traffic flow according to another example embodiment.
Figures 5a and 5b are schematic illustrations of an edge delivery node according to an example embodiment.
Figures 6a and 6b are schematic illustrations of a set-top-box according to an example embodiment.
Figures 7a and 7b are schematic illustrations of a user device according to an example embodiment.
Figure 8 is a schematic illustration of a cloud environment in which embodiments can be deployed.
Figure 9 is a flowchart of a method according to an example embodiment.

### DETAILED DESCRIPTION

Various features and embodiments will now be described with reference to the figures to fully convey the scope of the disclosure to those skilled in the art.

Many aspects will be described in terms of sequences of actions or functions. It should be recognized that in some embodiments, some functions or actions could be performed by specialized circuits, by program instructions being executed by one or more processors, or by a combination of both.

Further, some embodiments can be partially or completely embodied in the form of computer readable carrier or carrier wave containing an appropriate set of computer instructions that would cause a processor to carry out the techniques described herein.

In some alternate embodiments, the functions/actions may occur out of the order noted in the sequence of actions or simultaneously. Furthermore, in some illustrations, some blocks, functions or actions may be optional and may or may not be executed; these are generally illustrated with dashed lines.

The embodiments described herein address the problem of the utilizing the edge delivery nodes more efficiently in terms of throughput and footprint without compromising the end user experience, by using an artificial intelligence (AI) based media reconstruction mechanism. It is proposed to use a Neural Network Model, trained by the original high-resolution video contents to rebuild the high-resolution video content from the content with low resolution either at edge delivery node or the client device.

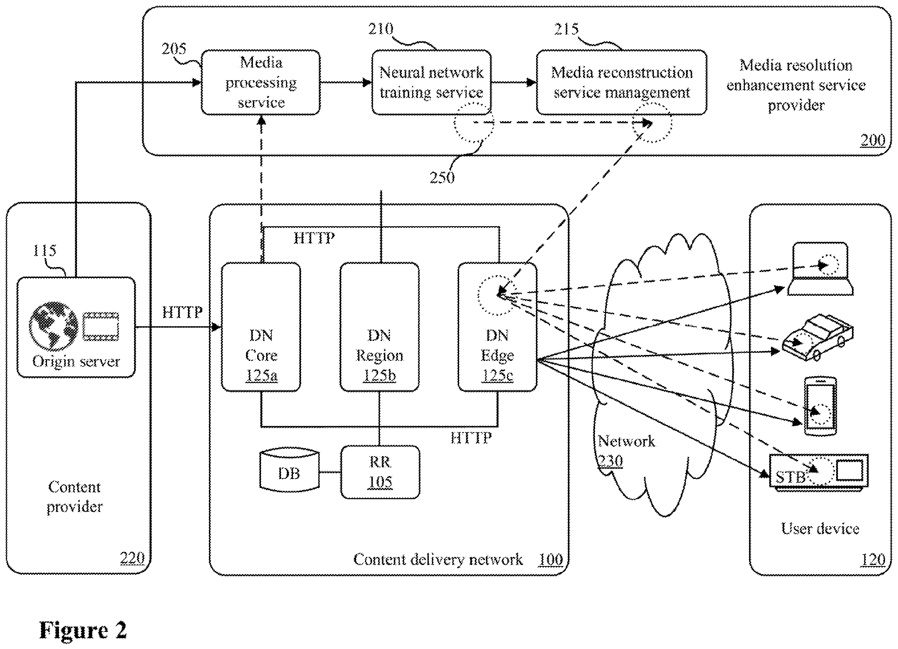

Referring to figure 2, a media resolution enhancement service provider 200 is introduced. This media resolution enhancement service provider 200 can be specialized in video, in other types of media or can be general and enhance any type of media. The media resolution enhancement service provider 200 can be a third-party product (3PP) independent service provider or it can be a part of the content delivery network 100.

The media resolution enhancement service provider 200 can, but does not necessarily, comprise three main components, as shown in Figure 2. The first component is the media processing service 205. In some instance, where the media resolution enhancement service provider 200 is specialized with video, the media processing service 205 is operative to process video content. The media (or video) processing service 205 takes an original video content, which is either received or fetched from the origin server 115 of the content provider 220 and processes it and prepares at least one dataset for use for training and validating a neural network. To prepare the dataset, the frames of the video file are processed and are transformed into digitalized entities which are used to build the at least one dataset. The dataset is then fed into the Neural Network training service 210. A dataset usually consist of an array or matrix of data. In this case, in an example embodiment, each pixel of a video frame could be converted in one element of a matrix which makes one entry of the dataset. Another way to build the dataset could be to use, to create one entry, a video frame plus the changes within certain time period, such that the dataset would be a function of digitalized video frames and changes within these video frames during a time period, in terms of milliseconds (ms) or in terms of a number of frames. Different types of processing or of formats of datasets would come to the mind of a person of ordinary skills in the art and could alternatively be used.

The neural network training service 210 utilizes the dataset to train a neural network model (NNM) that is capable enhancing the resolution of a low-resolution content or, said differently, rebuilding a high-resolution content (which can be a video content) from a corresponding low-resolution video content.

In general, in the context of video, the resolution represents the number of pixels given to each video frame. When fewer pixels are given, the number of data bits is smaller, this leads to low resolution of each video frame. Vice versa, high resolution means more pixels, the number of data bits is larger.

In CDN, due to network capacity, the throughput (transferring the number of bits per second), might be limited. When the throughput reaches a maximum capacity, the performance of content delivery deteriorates significantly, and leads to long end-to-end latency which affects the user streaming experience.

In order to deliver the content efficiently, the available network throughput needs to be taken into account. The current available throughput may be used to decide what resolution of video-frame is picked and transferred from the delivery node to user device.

In the context of this specification, low-resolution means a resolution that can usually be transmitted successfully by means of a wire or wirelessly when a network load is high or when a connection is weak. As networks and devices capacities as well as supported resolutions change over time, low-resolution may also change over time and what is considered high-resolution today may be considered low-resolution in a few years. A low-resolution media will typically consume less bandwidth than a high-resolution media, when transmitted. In the context of this specification, higher resolution means a resolution that is higher than a given low-resolution. Typically, a higher resolution provides a greater amount of data per time-period than a low-resolution.

For example, the dataset can comprise, as input, data corresponding to a low-resolution media and, as expected output, data corresponding to a high-resolution media. While training with such a dataset, a deep learning neural network (which has many layers of hidden neurons) learns how to enhance the low-resolution media into the corresponding high-resolution media. The literature provides techniques for how this can be achieved, see for examples: IEEE TRANSACTIONS ON COMPUTATIONAL IMAGING, COL.2, NO.2 JUNE 2016, Video Super-Resolution with Convolutional Neural Networks, by Kappeler et al. and 2017 IEEE CONFERENCE ON COMPUTER VISION AND PATTERN RECOGNITION WORKSHOPS, A Deep Convolutional Neural Network with Selection Units for Super-Resolution, by Choi et al. Other techniques could alternatively be used.

In the embodiments described herein it is envisioned that three types of trained neural networks can be generated: neural networks trained to enhance the resolution of a specific media file; neural networks trained to enhance the resolution of a specific category or media files, such media files having at least one common characteristic; and neural networks trained to enhance the resolution of any media file of a specific type (such as video) or of any type, with or without common characteristics.

The media resolution enhancement service provider 200 further comprise a media reconstruction service management 215 that is responsible for managing trained neural network model (TNNM) 250 for different media, which are alternatively called assets, for specific categories of assets or for general use on different categories of assets. In some embodiments, the services 205, 210 and 215 may be combined or may be spread throughout different nodes, physical or virtual at a same or at different sites or locations.

In order to support media resolution enhancement, which in some cases correspond to high-definition (high-resolution) video reconstruction from low-definition (low-resolution) video, some modifications are required in the origin server 115 and edge delivery node 125c. Some modifications may also be needed in the client or user device 120.

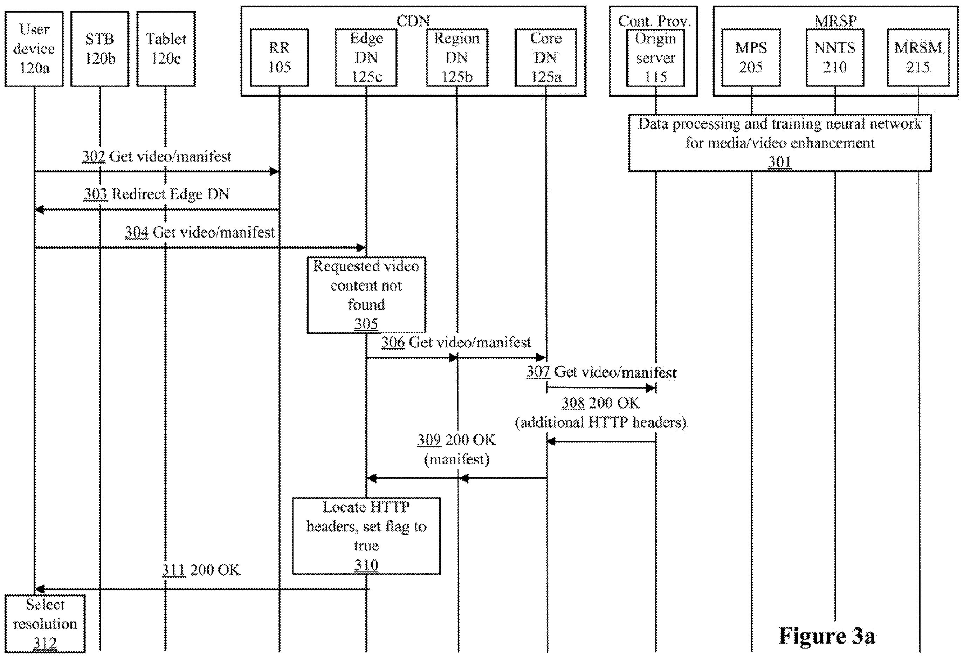

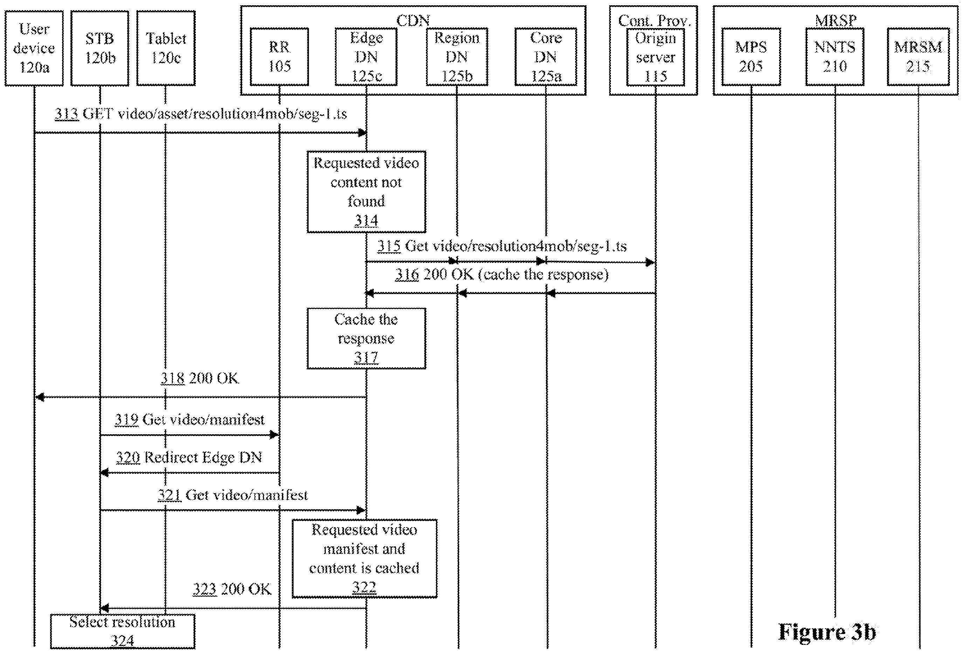

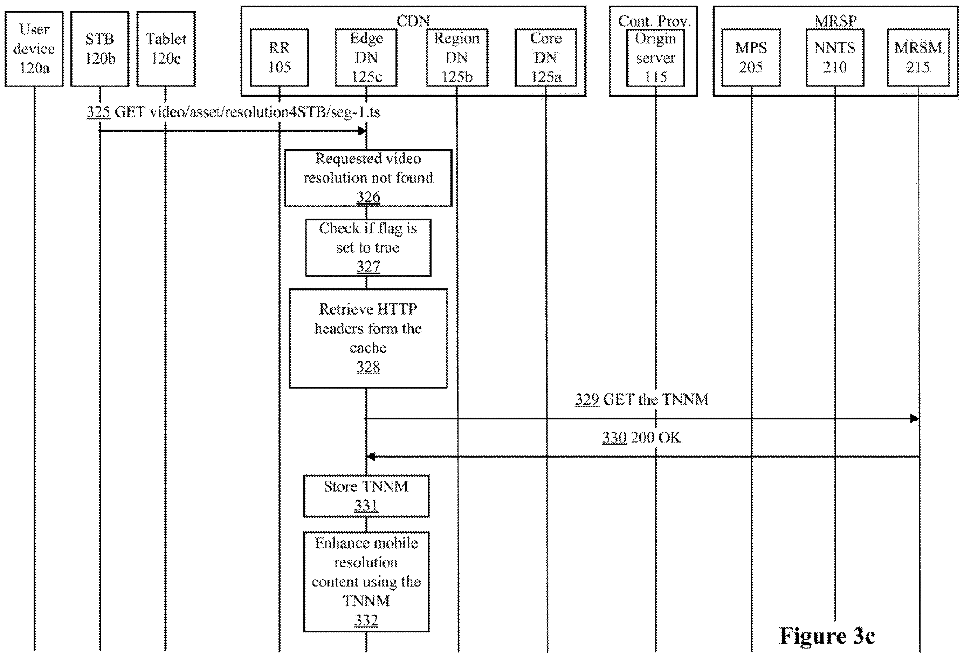

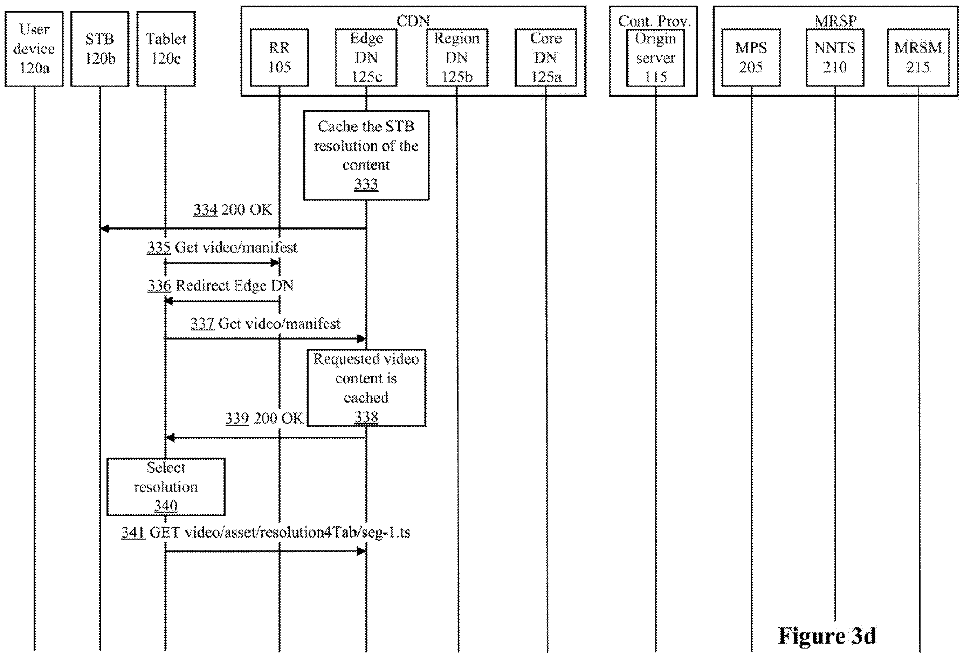

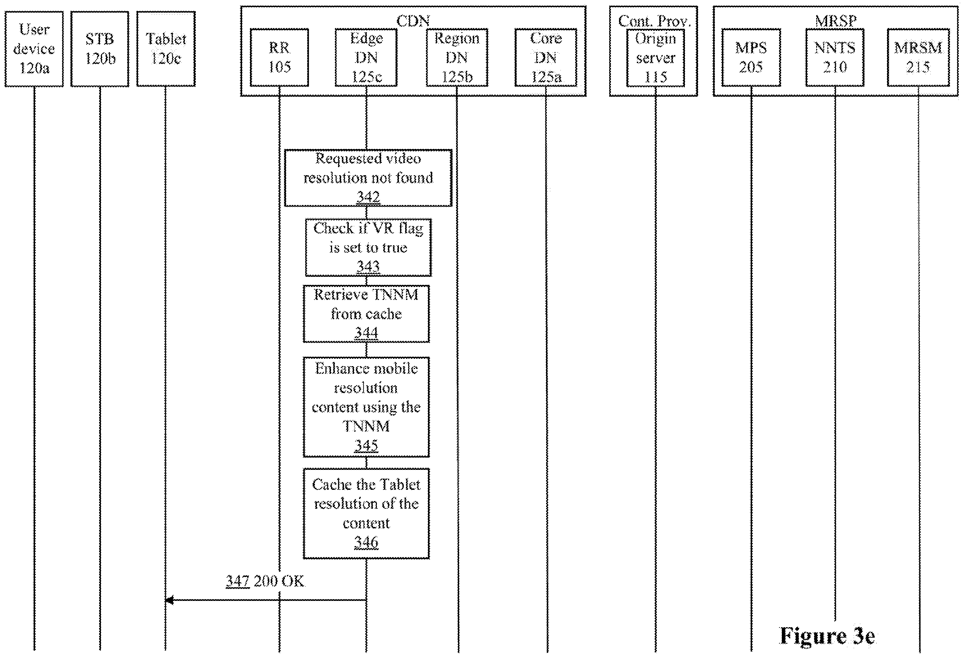

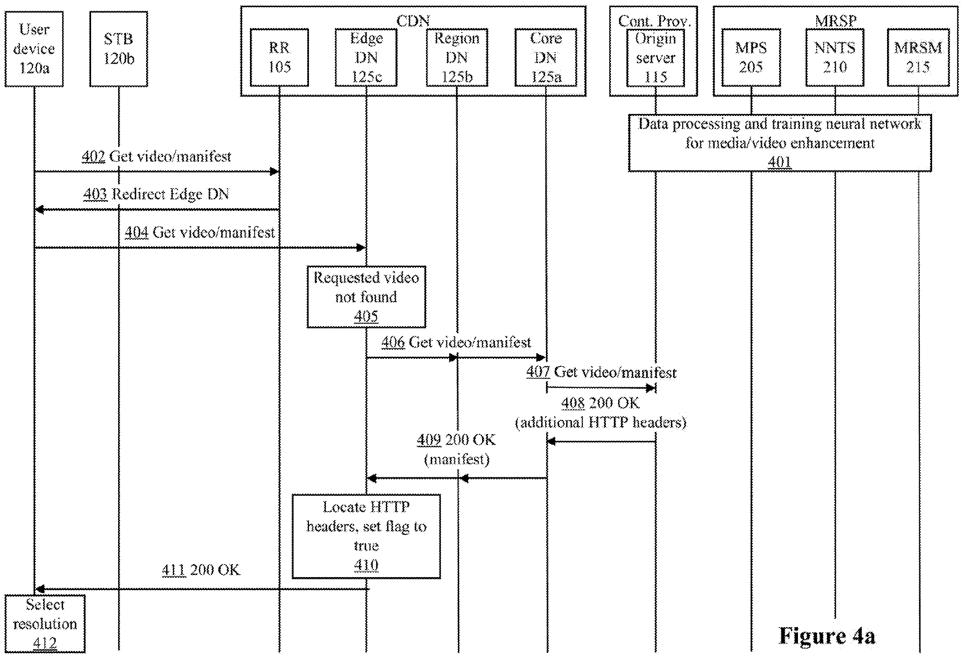

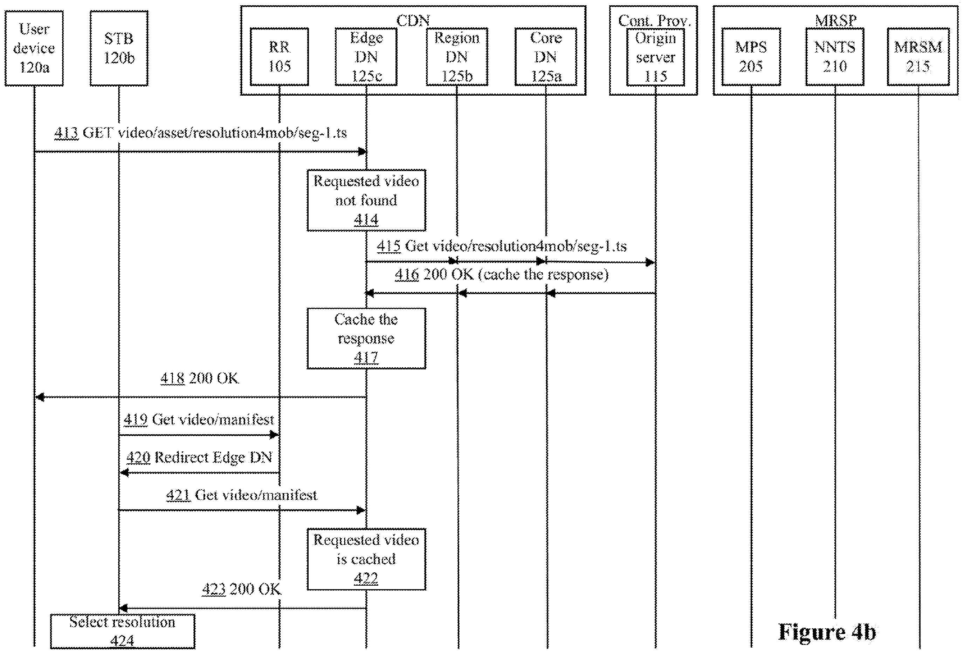

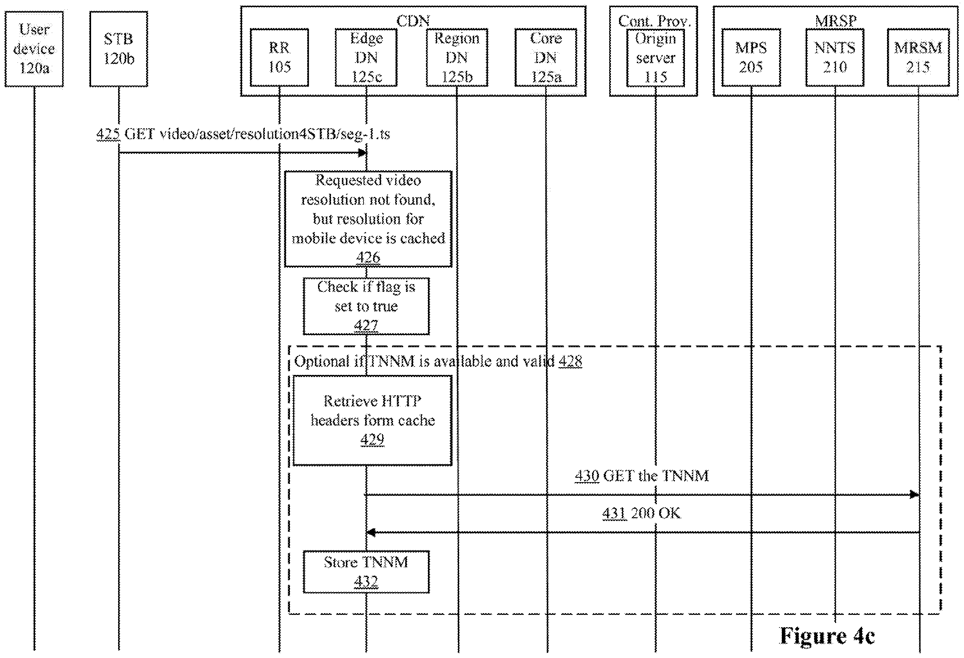

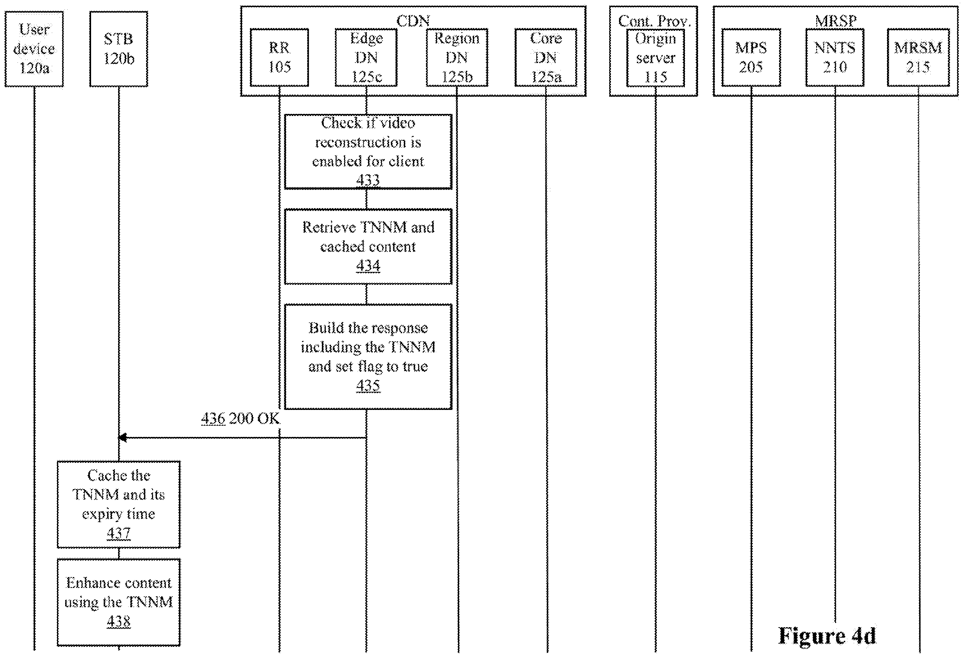

The origin server 115, should be able to integrate and communicate with the media resolution enhancement service provider 200 and to provide content to the media resolution enhancement service provider 200. The origin server 115 should also support hypertext transfer protocol (HTTP) headers in 200 OK response, such as, for example: X-Video-Reconstruction-Service-Provider and X-Video-Reconstruction-AssetId. The example embodiments of figures 3 and 4 will illustrate how these HTTP headers can be used. A person skilled in the art will understand that variations of these headers, or different HTTP headers intended for the same or a similar purpose could also be used and that these specific headers names are given as examples only.

The edge delivery node 125c, should be able to integrate and communicate with the media resolution enhancement service provider 200 and to receive TNNMs 250 from the media resolution enhancement service provider 200. Further, the edge delivery node 125c should comprise the logics for handling media reconstruction. The edge delivery node 125c should also be able to handle the following HTTP header in requests and responses, such as, for example: X-Video-Reconstruction-Service-Provider; X-Video-Reconstruction-AssetId; X-Video-Reconstruction-Support (Optional for client device support); X-Video-Reconstruction-TNNM (Optional for client device support). A person skilled in the art will understand that variations of these headers, or different HTTP headers intended for the same purpose could also be used and that these specific headers names are given as examples only.

In the client device 120, the client application can optionally support the following HTTP headers if the client device wants to download a TNNM in the device to do the media enhancement therein. The HTTP headers can be, for example: X-Video-Reconstruction-Support and X-Video-Reconstruction-TNNM. A person skilled in the art will understand that variations of these headers, or different HTTP headers intended for the same purpose could also be used and that these specific headers names are given as examples only.

Figure 3a-3e illustrates a traffic flow for the application of the TNNM 250 at the edge delivery node 125c. At step 301, data processing of the media or video is executed, followed by training the neural network for media or video enhancement. In the particular example of figure 3, the neural network is trained to reconstruct or enhance the resolution of a specific video content. However, the same method could be applied with a different type of neural network, able to reconstruct or enhance the resolution of a diverse media and/or video contents. Deep learning techniques may be applied and different types of neural networks (which have different properties) may be used. At step 302, a client 120a, which may be a mobile device such as a smart phone or other portable device, sends a request to the request router 105 to get the manifest for a video content. If the method is applied to other types of contents, such as mp4 file or other types of files, the request may be for the content directly since manifest files are used for ABR video. The same consideration would also apply to further steps of the traffic flow. At step 303, a redirect edge DN is received by the user device 120a from the RR 105, which indicates to the user device 120a which edge delivery node 125c should be contacted to receive the manifest for the content. At step 304, the user device 120a sends a request to get the manifest for the video content to the edge delivery node 125c.

At step 305, the edge delivery node 125c detects that the requested video content is not cached locally. At step 306, the edge delivery node 125c sends a request to get the manifest for the video content to the region delivery node 125b, which is forwarded to the core delivery node 125a, which both detect in the usual manner that the requested video content is not cached locally. The core delivery node then sends a request to get the manifest for the video content to the origin server 115, step 307. At step 308, the core delivery node receives a 200 OK with the manifest and additional HTTP header names such as X-Video-Reconstruction-Service-Provider and X-Video-Reconstruction-AssetId. These additional HTTP headers inform the edge DN about the video reconstruction service for the requested content. At step 309, the 200 OK is forwarded and with it the manifest and HTTP headers are transferred to the edge delivery node 125c through the region delivery node 125b. The edge delivery node 125c then caches the manifest. The manifest files can also be cached in the region and core DNs according to the caching policy of the region and core DNs. The HTTP headers for media enhancement/video reconstruction are located in the 200 OK response and a video reconstruction (VR) flag is set to true or to an equivalent value at step 310. The 200 OK response, including the video manifest, is forwarded to the user device at step 311. Again, a person skilled in the art will understand that a VR flag is one example and that equivalent means to indicate that video reconstruction is enabled can alternatively be used.

In step 312, the user device 120a selects a resolution suitable for the mobile device, as there may be many resolutions available in the manifest that may not be suitable for the mobile device. Then, the user device sends a request to get the video such as, for example, GET video/asset/resolution4MOB/seg-1.ts, step 313. A person skilled in the art will understand that this example uses a video content, but that the method would work similarly for other types of contents and different types, or variations of, requests, messages and responses exchanged between the different entities of figure 3.

At step 314, the edge delivery node 125c determines that the requested content cannot be found locally in the cache and forwards the request to get the video towards the origin server through the region and core DNs, step 315. A 200 OK is received at step 316 and the region and core DNs may cache the content (according to their caching policies). The edge delivery node caches the content at step 317 and forwards the 200 OK response to the user device with the requested video content at step 318.

At step 319, a set-top-box 120b sends a request to get the same video manifest for the same content to the request router 105. The RR 105 sends a redirect to the edge delivery node 125c at step 320 and the STB 120b requests the video manifest to the edge DN 125c at step 321. This time, the video manifest and content (mobile resolution only) are found in the cache of the edge DN, step 322, and a 200 OK with the content manifest is sent to the STB 120b, step 323.

At step 324, the STB 120b selects a resolution, which is typically higher than the resolution that was previously selected by the mobile device 120a. The STB 120b sends a request, such as GET video/asset/resolution4STB/seg-1.ts, to get the video content from the edge DN 125c at step 325. However, this resolution of the video content is not found in the cache of the edge DN, step 326, since the only version available is the one with the resolution previously selected by the mobile user device 120a. The edge DN 125c then checks if the VR flag for this asset is set to true in the cache, step 327. In the example, the flag is set to true and the edge DN retrieves the HTTP headers X-Video-Reconstruction-Service-Provider and X-Video-Reconstruction-AssetId which were previously saved in the cache for this asset, step 328. These HTTP headers are then used to get from the MRSM 215 the trained neural network model corresponding to this particular asset, step 329, to be able to enhance the resolution of the cached video to attain the resolution requested by the STB 120b. A 200 OK response with the TNNM is received at step 330. The edge DN 125c stores the TNNM, step 331, and applies the TNNM, step 332, to the content with the resolution for mobile device (resolution4mob) to build/enhance to the content with the resolution for STB (resolution4STB). The edge DN 125c then caches the version of the content with the STB resolution, step 333, and provides the content to the STB 120b with a 200 OK at step 334.

At step 335, a tablet 120c sends a request to get the same video manifest for the same content to the request router 105. The RR 105 sends a redirect to the edge delivery node 125c at step 336 and the tablet120c requests the video manifest to the edge DN 125c at step 337. Again, the video manifest and content (mobile resolution only) are found in the cache of the edge DN, step 338, and a 200 OK with the content manifest is sent to the tablet 120c, step 339.

At step 340, the tablet 120c selects a resolution. The tablet 120c sends a request, such as GET video/asset/resolution4Tab/seg-1.ts, to get the video content from the edge DN 125c at step 341. However, this resolution of the video content is not found in the cache of the edge DN, step 342, since the only versions available are the ones with the resolution previously selected by the mobile user device 120a and STB 120b. The edge DN 125c then checks if the VR flag for this asset is set to true in the cache, step 343. The edge DN 125c detects that the TNNM was previously received and retrieves the TNNM, step 344 from the local cache, and applies the TNNM, step 345, to the content with the resolution for mobile device (resolution4MOB) to build/enhance to the content with the resolution for tablet (resolution4Tab). A person skilled in the art will understand that it is preferable to use an original content (mobile device version) and not a previously enhanced content (STB version) at this step. The edge DN 125c then caches the version of the content with the tablet resolution, step 346, and provides the content to the tablet 120c with a 200 OK at step 347.

Figure 4a-4d illustrates a traffic flow for the application of the TNNM 250 at the client device 120a-b. At step 401, data processing of the media or video is executed, followed by training of neural network for media or video enhancement. In the particular example of figure 4, the neural network is trained to reconstruct or enhance the resolution of a specific video content. However, the same method could be applied with a different type of neural network, able to reconstruct or enhance the resolution of diverse media and/or video contents. Deep learning techniques may be applied and different types of neural networks (which have different properties) can be used. At step 402, a client user device 120a, which may a mobile device such as a smart phone or other portable device, sends a request to the request router 105 to get the manifest for a video content. If the method is applied to other types of contents, the request may be for the content directly since manifest files are used for ABR video. The same consideration would also apply to further steps of the traffic flow. At step 403, a redirect edge DN is received by the user device 120a from the RR 105, which indicates to the user device 120a which edge delivery node 125c should be contacted to receive the manifest for the content. At step 404, the user device 120a sends a request to get the manifest for the video content to the edge delivery node 125c.

At step 405, the edge delivery node 125c detects that the requested video content is not cached locally. At step 406, the edge delivery node 125c sends a request to get the manifest for the video content to the region delivery node 125b, which is forwarded to the core delivery node 125a, which both detect in the usual manner that the requested video content is not cached locally. The core delivery node then sends a request to get the manifest for the video content to the origin server 115, step 407. At step 408, the core delivery node receives a 200 OK with the manifest and additional HTTP header names such as X-Video-Reconstruction-Service-Provider and X-Video-Reconstruction-AssetId. At step 409, the 200 OK is forwarded and with it the manifest and HTTP headers are transferred to the edge delivery node 125c through the region delivery node 125b. The edge delivery node 125c then caches the manifest. The manifest files can also be cached in the region DN according to the caching policy of the region DN. The HTTP headers for media enhancement/video reconstruction are located in the 200 OK response and a VR flag is set to true or to an equivalent value at step 410. The 200 OK response, including the video manifest, is forwarded to the user device at step 411.

In step 412, the user device 120a selects a resolution suitable for the mobile device, as there may be many resolutions available in the manifest that may not be suitable for the mobile device. Then the user device sends a request to get the video such as, for example, GET video/asset/resolution4mob/seg-1.ts, step 413. A person skilled in the art will understand that this example uses a video content, but that the method would work similarly for other types of contents and different types, or variations of, requests, messages and responses exchanged between the different entities of figure 4.

At step 414, the edge delivery node 125c determines that the requested content cannot be found locally in the cache and forwards the request to get the video towards the origin server through the region and core DNs, step 415. A 200 OK is received at step 416 and the region and core DNs may cache the content. The edge delivery node caches the content at step 417 and forwards the 200 OK response to the user device with the requested video content at step 418.

At step 419, a set-top-box 120b sends a request to get the same video manifest for the same content to the request router 105. The RR 105 sends a redirect to the edge delivery node 125c at step 420 and the STB 120b requests the video manifest to the edge DN 125c at step 421. This time, the video manifest and content (mobile resolution only) are found in the cache of the edge DN, step 422, and a 200 OK with the content manifest is sent to the STB 120b, step 423.

At step 424, the STB 120b selects a resolution which is typically higher than the resolution that was previously selected by the mobile device 120a. The STB 120b sends a request, such as GET video/asset/resolution4STB/seg-1.ts, to get the video content from the edge DN 125c at step 425. However, this resolution of the video content is not found in the cache of the edge DN, step 426, since the only version available is the one with the resolution previously selected by the mobile user device 120a. The edge DN 125c then checks if the VR flag for this asset is set to true in the cache, step 427. The steps inside the box 428 are optional if the TNNM has been previously retrieved and if it is still valid (not expired). In the example, the flag is set to true and the edge DN retrieves the HTTP headers X-Video-Reconstruction-Service-Provider and X-Video-Reconstruction-AssetId which were previously saved in the cache for this asset, step 429. These HTTP headers are then used to get from the MRSM 215 the trained neural network model corresponding to this particular asset, step 430, to be able to enhance the resolution of the cached video to attain the resolution requested by the STB 120b. A 200 OK response with the TNNM is received at step 431. The edge DN 125c stores the TNNM, step 432. The edge delivery node then checks if the HTTP header X-Video-Reconstruction-Support in the client request was set to true, step 433. The edge DN 125c retrieves the TNNM for the requested content as well as the cached content, which is the version for the mobile user device, step 434. The edge DN builds the response including the TNNM and sets to true a flag of the HTTP header X-Video-Reconstruction-TNNM, step 435. The 200 OK response, including the low-resolution asset and TNNM, is sent to the STB 120b at step 436. The STB 120b caches the TNNM and its expiry time locally, step 437. The STB 120b then applies the TNNM to the received content which has the resolution selected by the mobile device and enhances the content, or, said differently, rebuilds the content with higher resolution for the STB, step 438.

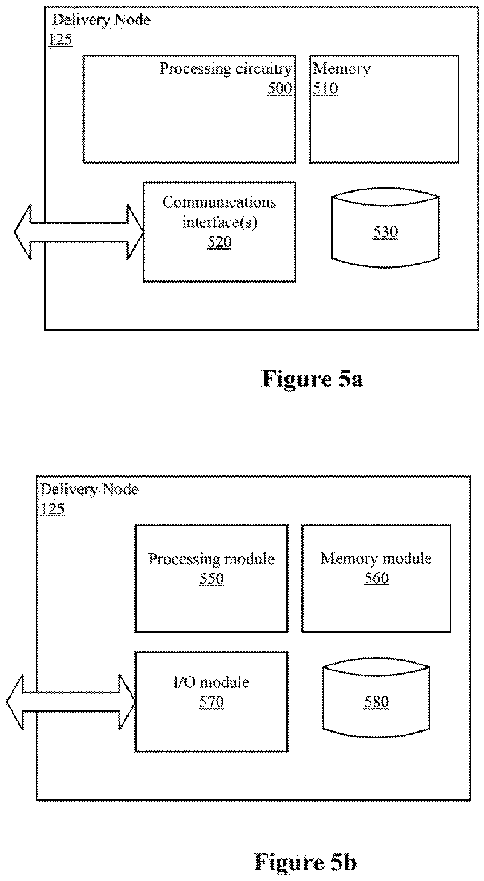

Figure 5 illustrates two versions 5a and 5b of a delivery node 125, which may be an edge delivery node, for providing to a user a higher resolution media segment by enhancing a low-resolution media segment, the edge delivery node comprising processing circuits 500 and a memory 510, the memory 510 containing instructions executable by the processing circuits whereby the edge delivery node is operative to obtain the low-resolution media segment; use a neural network operative to enhance media segments to enhance the low-resolution media segment into the higher resolution media segment; and provide the higher resolution media segment to the user.

Further, the edge delivery node includes a communications interface 520 and storage 530. The communications interface 520 generally includes analog and/or digital components for sending and receiving communications to and from other network nodes, either directly or via a network 230. Alternatively, the delivery node may be implemented with modules such as processing module 550, memory module 560, I/O module 570, and storage module 580 which provide functionalities equivalent to those provided in their counterpart in figure 5a.

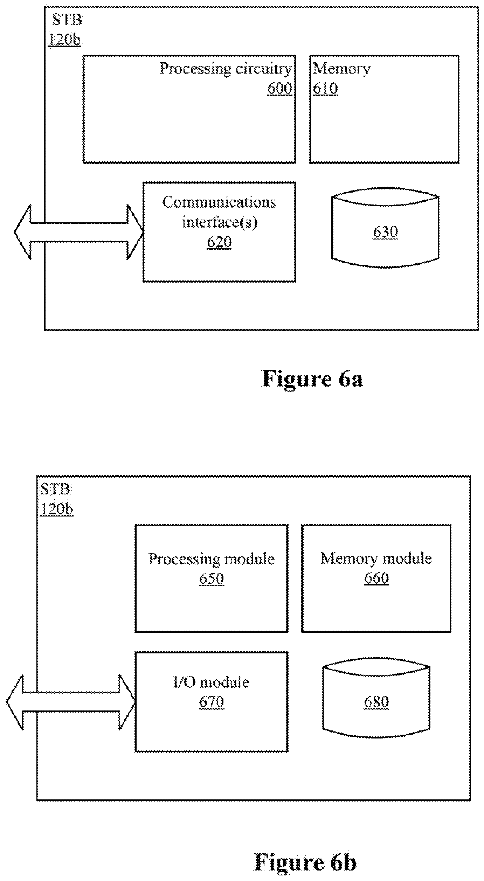

Figure 6 illustrates a set-top-box 120b for providing to a user a higher resolution media segment by enhancing a low-resolution media segment, the set-top-box comprising processing circuits 600 and a memory 610, the memory 610 containing instructions executable by the processing circuits 600 whereby the set-top-box is operative to obtain the low-resolution media segment; use a neural network operative to enhance media segments to enhance the low-resolution media segment into the higher resolution media segment; and provide the higher resolution media segment to the user.

Further, the STB includes a communications interface 620 and storage 630. The communications interface 620 generally includes analog and/or digital components for sending and receiving communications to and from other network nodes, either directly or via a network 230. Alternatively, the STB may be implemented with modules such as processing module 650, memory module 660, I/O module 670, and storage module 680 which provide functionalities equivalent to those provided in their counterpart in figure 6a.

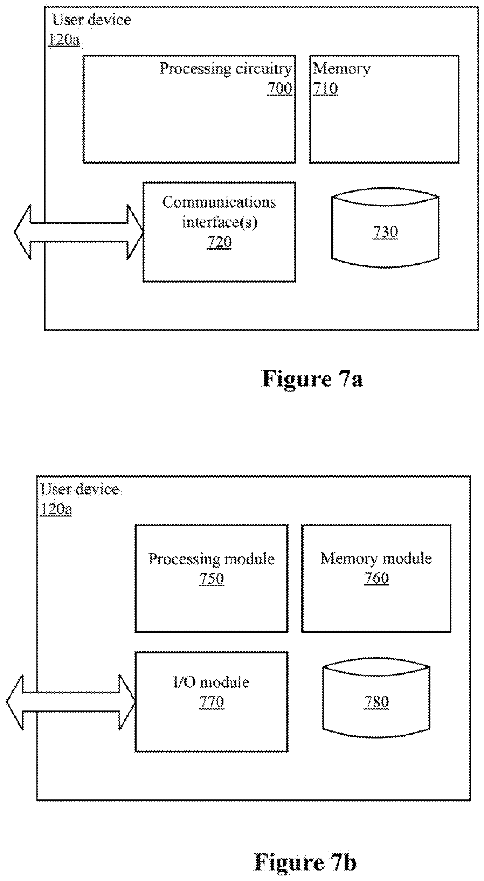

Figure 7 illustrates a user device 120a for providing to a user a higher resolution media segment by enhancing a low-resolution media segment, the user device 120a comprising processing circuits 700 and a memory 710, the memory 710 containing instructions executable by the processing circuits 700 whereby the user device is operative to obtain the low-resolution media segment; use a neural network operative to enhance media segments to enhance the low-resolution media segment into the higher resolution media segment; and provide the higher resolution media segment to the user.

Further, the user device includes a communications interface 720 and storage 730. The communications interface 720 generally includes analog and/or digital components for sending and receiving communications to and from other network nodes, either directly or via a network 230. Alternatively, the user device may be implemented with modules such as processing module 750, memory module 760, I/O module 770, and storage module 780 which provide functionalities equivalent to those provided in their counterpart in figure 7a.

The low-resolution media segment may be obtained by the edge delivery node 125c, the set-top-box 120b or the user device 120a from a network node. The network node may be an origin server. In the case of the edge delivery node, the network node may alternatively be a core or region delivery node of a content delivery network. In the case of the set-top-box or the user device, the network node may be an edge delivery node of a content delivery network.

The neural network used may be a deep neural network and may be a general neural network operative to enhance a broad spectrum of medias. Alternatively, the neural network may be a specialized neural network operative to enhance a category of medias having specific characteristics. Specific characteristics of video media may include, for example, but are not limited to, video size, resolution, color scheme, frame rate, encoding, length, etc. as well as image characteristics such as tone, color, sharpness, lighting, etc. A person skilled in the art would know the characteristics of video media as well as the characteristics of other types of medias, such as, for example, audio, images and data. The neural network may also be a dedicated neural network operative to enhance a specific media or a specific subset of medias. The edge delivery node, the set-top-box or the user device, may obtain the neural network operative to enhance media segments from a network service.

A person skilled in the art will understand that the use of a general neural network operative to enhance a broad spectrum (broad spectrum meaning either various type, length, format of video or a mixed type of media such as, but not limited to, video, audio, images, etc.) of medias will require more processing power than the use of a specialized neural network, as the general neural network will typically be bigger, with more hidden layers and will necessitate more computing operations to operate. Therefore, it is likely that general neural networks will be used in the network nodes and not in the user devices or STB, although, if processing power is available in these devices, they may be. Conversely, specialized neural networks or dedicated neural networks will be typically smaller and will require less computing power to operate than general neural networks and these smaller neural networks will be able to operate in less powerful devices such as user devices and STB.

The edge delivery node may provide the higher resolution media segment to the user by providing the higher resolution media segment to a set-top-box or to a user device ready for playback of the higher resolution media segment.

The set-top-box or user device may provide the higher resolution media segment to the user by obtaining the higher resolution media segment and playing the higher resolution media segment for the user.

Figures 5-7 necessarily omit numerous features that are not necessary for a complete understanding of this disclosure.

Although all of the details of the edge delivery node, STB and user device are not illustrated, the edge delivery node 125, STB 120b and/or user device 120a comprises one or several general-purpose or special-purpose processors 500, 600, 700 or other microcontrollers programmed with suitable software programming instructions and/or firmware to carry out some or all of the functionality described herein, in relation with figures 2-4 and 8-9. In addition, or alternatively, the edge delivery node, STB and/or user device may comprise various digital hardware blocks (e.g., one or more Application Specific Integrated Circuits (ASICs), one or more off-the-shelf digital or analog hardware components, or a combination thereof) configured to carry out some or all of the functionality of the edge delivery node, STB and/or user device described herein. A memory, such as a random access memory (RAM), may be used by the processor to store data and programming instructions which, when executed by the processor, implement all or part of the functionality described herein. The edge delivery node, STB and/or user device may also include one or more storage media for storing data necessary and/or suitable for implementing the functionality described herein, as well as for storing the programming instructions which, when executed on the processor, implement all or part of the functionality described herein. One embodiment of the present disclosure may be implemented as a computer program product that is stored on a computer-readable storage medium, the computer program product including programming instructions that are configured to cause the processor to carry out the steps described herein.

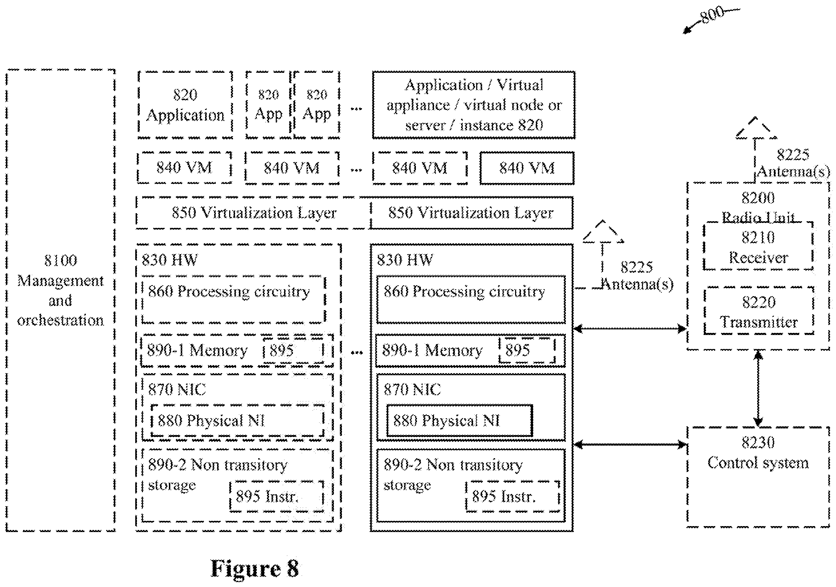

Figure 8 is a schematic block diagram illustrating a virtualization environment 800 in which functions implemented by some embodiments may be virtualized. As used herein, virtualization can be applied to a node or to a device and relates to an implementation in which at least a portion of the functionality is implemented as one or more virtual components (e.g., via one or more applications, components, functions, virtual machines executing on one or more physical processing nodes in one or more networks).

In some embodiments, some or all of the functions described herein may be implemented as virtual components executed by one or more virtual machines implemented in one or more virtual environments 800 hosted by one or more of hardware nodes 830. Further, in embodiments in which the virtual node is not a radio access node or does not require radio connectivity (e.g., a core network node), then the network node may be entirely virtualized.

The functions may be implemented by one or more applications 820 (which may alternatively be called software instances, virtual appliances, network functions, virtual nodes, virtual network functions, etc.) operative to implement steps of some methods according to some embodiments. Application 820 runs in virtualization environment 800 which provides hardware 830 comprising processing circuitry 860 and memory 890. Memory 890 contains instructions 895 executable by processing circuitry 860 whereby application 820 is operative to provide any of the relevant features, benefits, and/or functions disclosed herein.

Virtualization environment 800, comprises general-purpose or special-purpose network hardware devices 830 comprising a set of one or more processors or processing circuitry 860, which may be commercial off-the-shelf (COTS) processors, dedicated Application Specific Integrated Circuits (ASICs), or any other type of processing circuitry including digital or analog hardware components or special purpose processors. Each hardware device may comprise memory 890-1 which may be non-persistent memory for temporarily storing instructions 895 or software executed by the processing circuitry 860. Each hardware devices may comprise one or more network interface controllers 870 (NICs), also known as network interface cards, which include physical network interface 880. Each hardware devices may also include non-transitory, persistent, machine readable storage media 890-2 having stored therein software 895 and/or instruction executable by processing circuitry 860. Software 895 may include any type of software including software for instantiating one or more virtualization layers 850 (also referred to as hypervisors), software to execute virtual machines 840 or containers as well as software allowing to execute functions described in relation with some embodiments described herein.

Virtual machines 840 or containers, comprise virtual processing, virtual memory, virtual networking or interface and virtual storage, and may be run by a corresponding virtualization layer 850 or hypervisor. Different embodiments of the instance of virtual appliance 820 may be implemented on one or more of virtual machines 840 or containers, and the implementations may be made in different ways.

During operation, processing circuitry 860 executes software 895 to instantiate the hypervisor or virtualization layer 850, which may sometimes be referred to as a virtual machine monitor (VMM). Virtualization layer 850 may present a virtual operating platform that appears like networking hardware to virtual machine 840 or containers.

As shown in Figure 8, hardware 830 may be a standalone network node, with generic or specific components. Hardware 830 may comprise antenna 8225 and may implement some functions via virtualization. Alternatively, hardware 830 may be part of a larger cluster of hardware (e.g. such as in a data center or customer premise equipment (CPE)) where many hardware nodes work together and are managed via management and orchestration (MANO) 8100, which, among others, oversees lifecycle management of applications 820.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a virtual machine 840 is a software implementation of a physical machine that runs programs as if they were executing on a physical, non-virtualized machine. Each of virtual machines 840, and that part of the hardware 830 that executes that virtual machine, be it hardware dedicated to that virtual machine and/or hardware shared by that virtual machine with others of the virtual machines 840, forms a separate virtual network elements (VNE).

Still in the context of NFV, Virtual Network Function (VNF) is responsible for handling specific network functions that run in one or more virtual machines 840 on top of hardware networking infrastructure 830 and corresponds to application 820 in Figure 8.

In some embodiments, one or more radio units 8200 that each include one or more transmitters 8220 and one or more receivers 8210 may be coupled to one or more antennas 8225. Radio units 8200 may communicate directly with hardware nodes 830 via one or more appropriate network interfaces and may be used in combination with the virtual components to provide a virtual node with radio capabilities, such as a radio access node or a base station.

In some embodiments, some signaling can be effected with the use of control system 8230 which may alternatively be used for communication between the hardware nodes 830 and the radio units 8200.

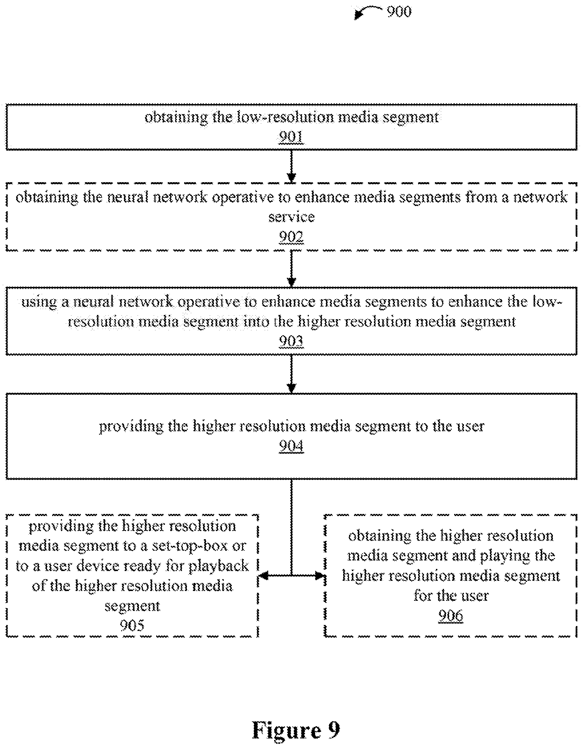

Figure 9 illustrates a method 900 according to an embodiment which may be executed in an edge delivery node 125c, a set-top-box 120b or a user device 120a such as illustrated in figures 2-4, 5a, 6a, 7a, in a virtual edge delivery node 125c, a virtual set-top-box 120b or a virtual user device 120a such as illustrated in figures 5b, 6b, 7b or in a virtualization environment 800, as a software instance, virtual appliance, network function, virtual node or as a virtual network function.

The method 900 is executed by an edge delivery node 125c, a set-top-box 120b or a user device 120a and is for providing to a user a higher resolution media segment by enhancing a low-resolution media segment. The method comprises obtaining the low-resolution media segment, step 901, using a neural network operative to enhance media segments to enhance the low-resolution media segment into the higher resolution media segment, step 903, and providing the higher resolution media segment to the user, step 904.

The low-resolution media segment may be obtained from a network node. The network node may be an origin server. The network node may alternatively be a core or region delivery node of a content delivery network. The network node may also be an edge delivery node of a content delivery network.

The neural network may be a deep neural network. The neural network may be a general neural network operative to enhance a broad spectrum of medias. The neural network may alternatively be a specialized neural network operative to enhance a category of medias having specific characteristics. The neural network may also be a dedicated neural network operative to enhance a specific media or a specific subset of medias.

The may further comprise obtaining the neural network operative to enhance media segments from a network service, step 902.

The method may be executed in an edge delivery node of a content delivery network and providing the higher resolution media segment to the user may comprise providing the higher resolution media segment to a set-top-box or to a user device ready for playback of the higher resolution media segment, step 905.

The method may be executed in a set-top-box or in a user equipment and providing the higher resolution media segment to the user may comprise obtaining the higher resolution media segment and playing the higher resolution media segment for the user, step 906.

Methods for providing to a user a higher resolution media segment by enhancing a low-resolution media segment have been previously described in relation with figures 3 and 4, for example, and the method 900 may further comprise any of the steps described in relation with figures 3 and 4.

The method, node and user devices presented herein contribute to provide the following advantages. The CDN operator can maximize the capacity of the edge delivery node and meet the increasing demand for delivering video contents. The content provider can see improvement in the end user experience, especially under the bottleneck of the access network between users and edge DN. The content consumer/end user can benefit by having a better user experience during periods of high network traffic.

The described embodiments are merely illustrative and should not be considered restrictive in any way. The scope sought is given by the appended claims.

## Claims

1. A method for providing to a user a higher resolution media segment by enhancing a low-resolution media segment, the method being performed by an edge delivery node (125c), a set-top-box (120b) or a user device (120a) and comprising:
- obtaining (901) the low-resolution media segment;
- obtaining (902) a neural network operative to enhance media segments from a network service;
- using (903) the neural network to enhance the low-resolution media segment into the higher resolution media segment; and
- providing (904) the higher resolution media segment to the user.

2. The method of claim 1, wherein the low-resolution media segment is obtained from a network node (115; 125a; 125b; 125c).

3. The method of claim 2, wherein the network node (115; 125a; 125b; 125c) is an origin server (115); or
wherein the network node is a core or region delivery node (125a; 125b) of a content delivery network (100); or
wherein the network node is an edge delivery node (125c) of a content delivery network (100).

4. The method of claim 1, wherein the neural network is a deep neural network; or
wherein the neural network is a general neural network operative to enhance a broad spectrum of medias; or
wherein the neural network is a specialized neural network operative to enhance a category of medias having specific characteristics; or
wherein the neural network is a dedicated neural network operative to enhance a specific media or a specific subset of medias.

5. The method of claim 1, wherein the method is executed in an edge delivery node (125c) of a content delivery network (100) and wherein providing (904) the higher resolution media segment to the user comprises providing (905) the higher resolution media segment to a set-top-box (120b) or to a user device (120a; 120c) ready for playback of the higher resolution media segment; or
wherein the method is executed in a set-top-box (120b) or in a user equipment (120a; 120c), and wherein providing (904) the higher resolution media segment to the user comprises obtaining (906) the higher resolution media segment and playing the higher resolution media segment for the user.

6. An edge delivery node (125c) for providing to a user a higher resolution media segment by enhancing a low-resolution media segment, the edge delivery node (125c) comprising processing circuits (500) and a memory (510), the memory (510) containing instructions executable by the processing circuits (500) whereby the edge delivery node (125c) is operative to:
- obtain the low-resolution media segment;
- obtain a neural network operative to enhance media segments from a network service;
- use the neural network to enhance the low-resolution media segment into the higher resolution media segment; and
- provide the higher resolution media segment to the user.

7. A set-top-box (120b) for providing to a user a higher resolution media segment by enhancing a low-resolution media segment, the set-top-box (120b) comprising processing circuits (600) and a memory (610), the memory (610) containing instructions executable by the processing circuits (600) whereby the set-top-box (120b) is operative to:
- obtain the low-resolution media segment;
- obtain a neural network operative to enhance media segments from a network service;
- use the neural network to enhance the low-resolution media segment into the higher resolution media segment; and
- provide the higher resolution media segment to the user.

8. A user device (120a) for providing to a user a higher resolution media segment by enhancing a low-resolution media segment, the user device (120a) comprising processing circuits (700) and a memory (710), the memory (710) containing instructions executable by the processing circuits (700) whereby the user device (120a) is operative to:
- obtain the low-resolution media segment;
- obtain a neural network operative to enhance media segments from a network service;
- use the neural network to enhance the low-resolution media segment into the higher resolution media segment; and
- provide the higher resolution media segment to the user.

9. The edge delivery node (125c) of claim 6, the set-top-box (120b) of claim 7 or the user device (120a) of claim 8, wherein the low-resolution media segment is obtained from a network node (115; 125a; 125b; 125c).

10. The edge delivery node (125c), the set-top-box (120b) or the user device (120a) of claim 9, wherein the network node (115; 125a; 125b; 125c) is an origin server (115).

11. The edge delivery node (125c) of claim 9, wherein the network node (115; 125a; 125b; 125c) is a core or region delivery node (125a; 125b) of a content delivery network (100).

12. The set-top-box (120b) or the user device (120a) of claim 9, wherein the network node (115; 125a; 125b; 125c) is an edge delivery node (125c) of a content delivery network (100).

13. The edge delivery node (125c) of claim 6, the set-top-box (120b) of claim 7 or the user device (120a) of claim 8, wherein the neural network is a deep neural network; or
wherein the neural network is a general neural network operative to enhance a broad spectrum of medias; or
wherein the neural network is a specialized neural network operative to enhance a category of medias having specific characteristics; or
wherein the neural network is a dedicated neural network operative to enhance a specific media or a specific subset of medias.

14. The edge delivery node (125c) of claim 6, wherein providing the higher resolution media segment to the user comprises providing the higher resolution media segment to a set-top-box (120b) or to a user device (120a) ready for playback of the higher resolution media segment.

15. The set-top-box (120b) of claim 7 or the user device (120a) of claim 8, wherein providing the higher resolution media segment to the user comprises obtaining the higher resolution media segment and playing the higher resolution media segment for the user.

## Patentansprüche

1. Verfahren zur Bereitstellung eines Mediensegments mit einer höheren Auflösung für einen Benutzer durch Verbessern eines Mediensegments mit einer niedrigen Auflösung, wobei das Verfahren von einem Edge-Zustellungsknoten (125c), einem Digitalempfänger (120b) oder einer Benutzervorrichtung (120a) durchgeführt wird und umfasst:
- Erhalten (901) des Mediensegments mit der niedrigen Auflösung;
- Erhalten (902) eines neuronalen Netzwerks, das zum Verbessern von Mediensegmenten ausgelegt ist, von einem Netzwerkdienst;
- Verwenden (903) des neuronalen Netzwerks zum Verbessern des Mediensegments mit der niedrigen Auflösung in das Mediensegment mit der höheren Auflösung; und
- Bereitstellen (904) des Mediensegments mit der höheren Auflösung für den Benutzer.

2. Verfahren nach Anspruch 1, wobei das Mediensegment mit der niedrigen Auflösung von einem Netzwerkknoten (115; 125a; 125b; 125c) erhalten wird.

3. Verfahren nach Anspruch 2, wobei der Netzwerkknoten (115; 125a; 125b; 125c) ein Ursprungsserver (115) ist; oder
wobei der Netzwerkknoten ein Kern- oder Regionszustellungsknoten (125a; 125b) eines Inhaltszustellungsnetzwerks (100) ist; oder
wobei der Netzwerkknoten ein Edge-Zustellungsknoten (125c) eines Inhaltszustellungsnetzwerks (100) ist.

4. Verfahren nach Anspruch 1, wobei das neuronale Netzwerk ein tiefes neuronales Netzwerk ist; oder
wobei das neuronale Netzwerk ein allgemeines neuronales Netzwerk ist, das zum Verbessern eines breiten Spektrums von Medien ausgelegt ist; oder
wobei das neuronale Netzwerk ein spezialisiertes neuronales Netzwerk ist, das zum Verbessern einer Kategorie von Medien mit spezifischen Charakteristiken ausgelegt ist; oder
wobei das neuronale Netzwerk ein dediziertes neuronales Netzwerk ist, das zum Verbessern eines spezifischen Mediums oder einer spezifischen Teilmenge von Medien ausgelegt ist.

5. Verfahren nach Anspruch 1, wobei das Verfahren in einem Edge-Zustellungsknoten (125c) eines Inhaltszustellungsnetzwerks (100) ausgeführt wird, und wobei das Bereitstellen (904) des Mediensegments mit der höheren Auflösung für den Benutzer ein Bereitstellen (905) des Mediensegments mit der höheren Auflösung für einen Digitalempfänger (120b) oder eine Benutzervorrichtung (120a; 120c) umfasst, der/die zum Wiedergeben des Mediensegments mit der höheren Auflösung bereit ist; oder
wobei das Verfahren in einem Digitalempfänger (120b) oder in einer Benutzervorrichtung (120a; 120c) ausgeführt wird, und wobei das Bereitstellen (904) des Mediensegments mit der höheren Auflösung für den Benutzer ein Erhalten (906) des Mediensegments mit der höheren Auflösung und Wiedergeben des Mediensegments mit der höheren Auflösung für den Benutzer umfasst.

6. Edge-Zustellungsknoten (125c) zum Bereitstellen eines Mediensegments mit einer höheren Auflösung für einen Benutzer durch Verbessern eines Mediensegments mit einer niedrigen Auflösung, wobei der Edge-Zustellungsknoten (125c) Verarbeitungsschaltungen (500) und einen Speicher (510) umfasst, wobei der Speicher (510) Anweisungen enthält, die von den Verarbeitungsschaltungen (500) ausgeführt werden können, wodurch der Edge-Zustellungsknoten (125c) ausgelegt ist zum:
- Erhalten des Mediensegments mit der niedrigen Auflösung;
- Erhalten eines neuronalen Netzwerks, das zum Verbessern von Mediensegmenten ausgelegt ist, von einem Netzwerkdienst;
- Verwenden des neuronalen Netzwerks zum Verbessern des Mediensegments mit der niedrigen Auflösung in das Mediensegment mit der höheren Auflösung; und
- Bereitstellen des Mediensegments mit der höheren Auflösung für den Benutzer.

7. Digitalempfänger (120b) zum Bereitstellen eines Mediensegments mit einer höheren Auflösung für einen Benutzer durch Verbessern eines Mediensegments mit einer niedrigen Auflösung, wobei der Digitalempfänger (120b) Verarbeitungsschaltungen (600) und einen Speicher (610) umfasst, wobei der Speicher (610) Anweisungen enthält, die von den Verarbeitungsschaltungen (600) ausgeführt werden können, wodurch der Digitalempfänger (120b) ausgelegt ist zum:
- Erhalten des Mediensegments mit der niedrigen Auflösung;
- Erhalten eines neuronalen Netzwerks, das zum Verbessern von Mediensegmenten ausgelegt ist, von einem Netzwerkdienst;
- Verwenden des neuronalen Netzwerks zum Verbessern des Mediensegments mit der niedrigen Auflösung in das Mediensegment mit der höheren Auflösung; und
- Bereitstellen des Mediensegments mit der höheren Auflösung für den Benutzer.

8. Benutzervorrichtung (120a) zum Bereitstellen eines Mediensegments mit einer höheren Auflösung für einen Benutzer durch Verbessern eines Mediensegments mit einer niedrigen Auflösung, wobei die Benutzervorrichtung (120a) Verarbeitungsschaltungen (700) und einen Speicher (710) umfasst, wobei der Speicher (710) Anweisungen enthält, die von den Verarbeitungsschaltungen (700) ausgeführt werden können, wodurch die Benutzervorrichtung (120a) ausgelegt ist zum:
- Erhalten des Mediensegments mit der niedrigen Auflösung;
- Erhalten eines neuronalen Netzwerks, das zum Verbessern von Mediensegmenten ausgelegt ist, von einem Netzwerkdienst;
- Verwenden des neuronalen Netzwerks zum Verbessern des Mediensegments mit der niedrigen Auflösung in das Mediensegment mit der höheren Auflösung; und
- Bereitstellen des Mediensegments mit der höheren Auflösung für den Benutzer.

9. Edge-Zustellungsknoten (125c) nach Anspruch 6, Digitalempfänger (120b) nach Anspruch 7 oder Benutzervorrichtung (120a) nach Anspruch 8, wobei das Mediensegment mit der niedrigen Auflösung von einem Netzwerkknoten (115; 125a; 125b; 125c) empfangen wird.

10. Edge-Zustellungsknoten (125c), Digitalempfänger (120b) oder Benutzervorrichtung (120a) nach Anspruch 9, wobei der Netzwerkknoten (115; 125a; 125b; 125c) ein Ursprungsserver (115) ist.

11. Edge-Zustellungsknoten (125c) nach Anspruch 9, wobei der Netzwerkknoten (115; 125a; 125b; 125c) ein Kern- oder Regionszustellungsknoten (125a; 125b) eines Inhaltszustellungsnetzwerks (100) ist.

12. Digitalempfänger (120b) oder Benutzervorrichtung (120a) nach Anspruch 9, wobei der Netzwerkknoten (115; 125a; 125b; 125c) ein Edge-Zustellungsknoten (125c) eines Inhaltszustellungsnetzwerks (100) ist.

13. Edge-Zustellungsknoten (125c) nach Anspruch 6, Digitalempfänger (120b) nach Anspruch 7 oder Benutzervorrichtung (120a) nach Anspruch 8, wobei das neuronale Netzwerk ein tiefes neuronales Netzwerk ist; oder
wobei das neuronale Netzwerk ein allgemeines neuronales Netzwerk ist, das zum Verbessern eines breiten Spektrums von Medien ausgelegt ist; oder wobei das neuronale Netzwerk ein spezialisiertes neuronales Netzwerk ist, das zum Verbessern einer Kategorie von Medien mit spezifischen Charakteristiken ausgelegt ist; oder
wobei das neuronale Netzwerk ein dediziertes neuronales Netzwerk ist, das zum Verbessern eines spezifischen Mediums oder einer spezifischen Teilmenge von Medien ausgelegt ist.

14. Edge-Zustellungsknoten (125c) nach Anspruch 6, wobei das Bereitstellen des Mediensegments mit der höheren Auflösung für den Benutzer ein Bereitstellen des Mediensegments mit der höheren Auflösung für einen Digitalempfänger (120b) oder eine Benutzervorrichtung (120a) umfasst, der/die zum Wiedergeben des Mediensegments mit der höheren Auflösung bereit ist.

15. Digitalempfänger (120b) nach Anspruch 7 oder Benutzervorrichtung (120a) nach Anspruch 8, wobei das Bereitstellen des Mediensegments mit der höheren Auflösung für den Benutzer umfasst:
Erhalten des Mediensegments mit der höheren Auflösung und Wiedergeben des Mediensegments mit der höheren Auflösung für den Benutzer.

## Revendications

1. Procédé pour fournir, à un utilisateur, un segment multimédia de résolution supérieure par l'amélioration d'un segment multimédia de basse résolution, le procédé étant réalisé par un nœud de distribution périphérique (125c), un boîtier décodeur (120b) ou un dispositif d'utilisateur (120a) et comprenant :
- l'obtention (901) du segment multimédia de basse résolution ;
- l'obtention (902) d'un réseau neuronal opérationnel pour améliorer des segments multimédias à partir d'un service de réseau ;
- l'utilisation (903) du réseau neuronal pour améliorer le segment multimédia de basse résolution par le segment multimédia de résolution supérieure ; et
- la fourniture (904) du segment multimédia de résolution supérieure à l'utilisateur.

2. Procédé selon la revendication 1, dans lequel le segment multimédia de basse résolution est obtenu à partir d'un nœud de réseau (115 ; 125a ; 125b ; 125c).

3. Procédé selon la revendication 2, dans lequel le nœud de réseau (115 ; 125a ; 125b ; 125c) est un serveur d'origine (115) ; ou
dans lequel le nœud de réseau est un nœud de distribution central ou régional (125a ; 125b) d'un réseau de distribution de contenu (100) ; ou
dans lequel le nœud de réseau est un nœud de distribution périphérique (125c) d'un réseau de distribution de contenu (100).

4. Procédé selon la revendication 1, dans lequel le réseau neuronal est un réseau neuronal profond ; ou
dans lequel le réseau neuronal est un réseau neuronal général opérationnel pour améliorer un large spectre de médias ; ou
dans lequel le réseau neuronal est un réseau neuronal spécialisé opérationnel pour améliorer une catégorie de médias ayant des caractéristiques spécifiques ; ou
dans lequel le réseau neuronal est un réseau neuronal dédié opérationnel pour améliorer un média spécifique ou un sous-ensemble spécifique de médias.

5. Procédé selon la revendication 1, dans lequel le procédé est exécuté dans un nœud de distribution périphérique (125c) d'un réseau de distribution de contenu (100) et dans lequel la fourniture (904) du segment multimédia de résolution supérieure à l'utilisateur comprend la fourniture (905) du segment multimédia de résolution supérieure à un boîtier décodeur (120b) ou à un dispositif d'utilisateur (120a ; 120c) prêt pour la lecture du segment multimédia de résolution supérieure ; ou
dans lequel le procédé est exécuté dans un boîtier décodeur (120b) ou dans un équipement utilisateur (120a ; 120c), et dans lequel la fourniture (904) du segment multimédia de résolution supérieure à l'utilisateur comprend l'obtention (906) du segment multimédia de résolution supérieure et la lecture du segment multimédia de résolution supérieure pour l'utilisateur.

6. Nœud de distribution périphérique (125c) pour fournir, à un utilisateur, un segment multimédia de résolution supérieure par l'amélioration d'un segment multimédia de basse résolution, le nœud de distribution périphérique (125c) comprenant des circuits de traitement (500) et une mémoire (510), la mémoire (510) contenant des instructions exécutables par les circuits de traitement (500) de telle manière que le nœud de distribution périphérique (125c) soit opérationnel pour :
- obtenir le segment multimédia de basse résolution ;
- obtenir un réseau neuronal opérationnel pour améliorer des segments multimédias à partir d'un service de réseau ;
- utiliser le réseau neuronal pour améliorer le segment multimédia de basse résolution par le segment multimédia de résolution supérieure ; et
- fournir le segment multimédia de résolution supérieure à l'utilisateur.

7. Boîtier décodeur (120b) pour fournir, à un utilisateur, un segment multimédia de résolution supérieure par l'amélioration d'un segment multimédia de basse résolution, le boîtier décodeur (120b) comprenant des circuits de traitement (600) et une mémoire (610), la mémoire (610) contenant des instructions exécutables par les circuits de traitement (600) de telle manière que le boîtier décodeur (120b) soit opérationnel pour :
- obtenir le segment multimédia de basse résolution ;
- obtenir un réseau neuronal opérationnel pour améliorer des segments multimédias à partir d'un service de réseau ;
- utiliser le réseau neuronal pour améliorer le segment multimédia de basse résolution par le segment multimédia de résolution supérieure ; et
- fournir le segment multimédia de résolution supérieure à l'utilisateur.

8. Dispositif d'utilisateur (120a) pour fournir, à un utilisateur, un segment multimédia de résolution supérieure par l'amélioration d'un segment multimédia de basse résolution, le dispositif d'utilisateur (120a) comprenant des circuits de traitement (700) et une mémoire (710), la mémoire (710) contenant des instructions exécutables par les circuits de traitement (700) de telle manière que le dispositif d'utilisateur (120a) soit opérationnel pour :
- obtenir le segment multimédia de basse résolution ;
- obtenir un réseau neuronal opérationnel pour améliorer des segments multimédias à partir d'un service de réseau ;
- utiliser le réseau neuronal pour améliorer le segment multimédia de basse résolution par le segment multimédia de résolution supérieure ; et
- fournir le segment multimédia de résolution supérieure à l'utilisateur.

9. Nœud de distribution périphérique (125c) selon la revendication 6, boîtier décodeur (120b) selon la revendication 7 ou dispositif d'utilisateur (120a) selon la revendication 8, dans lequel le segment multimédia de basse résolution est obtenu à partir d'un nœud de réseau (115 ; 125a ; 125b ; 125c).

10. Nœud de distribution périphérique (125c), boîtier décodeur (120b) ou dispositif d'utilisateur (120a) selon la revendication 9, dans lequel le nœud de réseau (115 ; 125a ; 125b ; 125c) est un serveur d'origine (115) .

11. Nœud de distribution périphérique (125c) selon la revendication 9, dans lequel le nœud de réseau (115 ; 125a ; 125b ; 125c) est un nœud de distribution central ou régional (125a ; 125b) d'un réseau de distribution de contenu (100).

12. Boîtier décodeur (120b) ou dispositif d'utilisateur (120a) selon la revendication 9, dans lequel le nœud de réseau (115 ; 125a ; 125b ; 125c) est un nœud de distribution périphérique (125c) d'un réseau de distribution de contenu (100).

13. Nœud de distribution périphérique (125c) selon la revendication 6, boîtier décodeur (120b) selon la revendication 7 ou dispositif d'utilisateur (120a) selon la revendication 8, dans lequel le réseau neuronal est un réseau neuronal profond ; ou
dans lequel le réseau neuronal est un réseau neuronal général opérationnel pour améliorer un large spectre de médias ; ou
dans lequel le réseau neuronal est un réseau neuronal spécialisé opérationnel pour améliorer une catégorie de médias ayant des caractéristiques spécifiques ; ou
dans lequel le réseau neuronal est un réseau neuronal dédié opérationnel pour améliorer un média spécifique ou un sous-ensemble spécifique de médias.

14. Nœud de distribution périphérique (125c) selon la revendication 6, dans lequel la fourniture du segment multimédia de résolution supérieure à l'utilisateur comprend la fourniture du segment multimédia de résolution supérieure à un boîtier décodeur (120b) ou à un dispositif d'utilisateur (120a) prêt pour la lecture du segment multimédia de résolution supérieure.

15. Boîtier décodeur (120b) selon la revendication 7 ou dispositif d'utilisateur (120a) selon la revendication 8, dans lequel la fourniture du segment multimédia de résolution supérieure à l'utilisateur comprend l'obtention du segment multimédia de résolution supérieure et la lecture du segment multimédia de résolution supérieure pour l'utilisateur.
